# EUROPÄISCHE PATENTSCHRIFT

(11) **EP 0 653 234 B1**
(45) Veröffentlichungstag und Bekanntmachung des Hinweises auf die Patenterteilung: **04.06.1997**
(21) Anmeldenummer: 94108514.4
(22) Anmeldetag: 16.03.1992
(51) Int. Cl.: B01D 35/153, B01D 29/21, B01D 24/08, B01D 29/54

(54) **Flüssigkeitsfilter**
Liquid filter
Filtre à liquide

(30) Priorität: 28.03.1991 DE 4110307; 20.09.1991 DE 4131353; 17.01.1992 DE 4201041
(43) Veröffentlichungstag der Anmeldung: 17.05.1995
(62) Teilanmeldung aus: 92907095.1
(73) Patentinhaber: KNECHT FILTERWERKE GMBH, D-70376 Stuttgart (DE)
(72) Erfinder: Gebert, Hans, D-74080 Heilbronn-Böckingen (DE); Möhle, Rolf, D-74626 Bretzfeld (DE); Sonntag, Dietmar, D-71686 Remseck (DE); Bruss, Elke, D-71679 Asperg (DE); Gundert, Dietwart, D-74321 Bietigheim-Bissingen (DE); Müller, Hubert, D-70327 Stuttgart (DE)
(74) Vertreter: Patentanwalts-Partnerschaft Rotermund + Pfusch

(56) Entgegenhaltungen:
- FR-A- 2 332 786
- US-A- 3 268 077

## Beschreibung

Die Erfindung betrifft ein Flüssigkeitsfilter nach dem Oberbegriff des Patentanspruchs 1.

Ein solches Filter ist aus DE 39 03 675 A1 bekannt.

Hiervon ausgehend beschäftigt sich die Erfindung zum einen mit dem Problem, auf konstruktiv und funktionell möglichst einfache Weise einen Flüssigkeitsabfluß beim Öffnen des Deckels zu schaffen und darüberhinaus zusätzlich noch mit dem Problem, gleichzeitig Filtereinsätze in der Funktion als Haupt- und Nebenstromfilterelemente auf ebenfalls einfache Weise austauschbar in dem Filtergehäuse anzubringen.

Gelöst wird der vorstehend genannte erste Aufgabenkomplex durch eine Ausführung des Flüssigkeitsfilters nach den kennzeichnenden Merkmalen des Patentanspruchs 1.

Die Unteransprüche stellen im wesentlichen eine zusätzliche Lösung des eingangs erwähnten zweiten Aufgabenkomplexes dar.

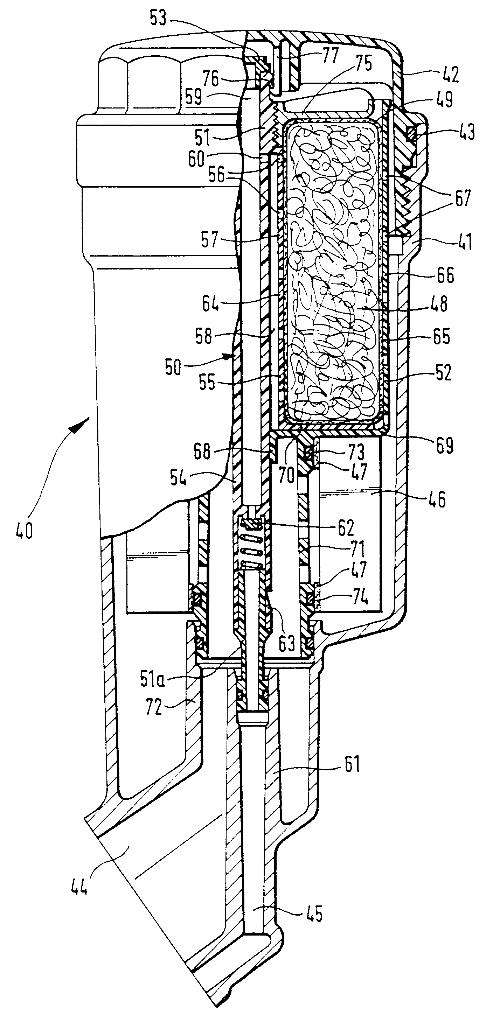

Ein Ausführungsbeispiel ist in der Zeichnung dargestellt, die ein Flüssigkeitsfilter in einem Teilschnitt zeigt.

Ein Flüssigkeitsfilter 40 ist als Haupt-Nebenstromfilter ausgebildet. Der üblicherweise stehend angeordnete Flüssigkeitsfilter 40 enthält ein topfförmiges Filtergehäuse 41 aus Aluminium-Druckguß und einen aufschraubbaren Gehäusedeckel 42 aus Kunststoff, zwischen denen eine Dichtung 43 vorgesehen ist. Am geschlossenen Ende des Filtergehäuses 41 sind Zu- und Ablaufkanäle für die Flüssigkeit vorgesehen. Das Beispiel betrifft ein Schmierölfilter für Verbrennungsmotoren. Die Flüssigkeit wird nachfolgend daher jeweils als Schmieröl bezeichnet werden.

Ein zu den Schmierstellen eines Verbrennungsmotors führender Ablaufkanal 44 für das gereinigte Schmieröl im Hauptstrom und ein in den Kurbelraum des Verbrennungsmotors führender Ablaufkanal 45 für das gereinigte Schmieröl im Nebenstrom sind bei dem Filter vorgesehen.

Ein Hauptstromfilterelement 46 ist beispielsweise aus Papier als taschenverklebter Sternfilter ausgebildet und an seinen Enden innen jeweils mit einer Hülse 47 aus verfestigtem Papier durch Verklebung fest verbunden.

Ein Nebenstromfilterelement 48 besteht aus gestopfter Baumwolle, die von einem endlosen ringförmigen Schlauch 49 aus Baumwolle aufgenommen wird. Da beide Filterelemente 46, 48 jeweils aus einheitlichen Materialien bestehen, können sie auf einfache Weise, auch getrennt, umweltfreundlich entsorgt werden.

Zur Halterung der Filterelemente 46, 48 im Inneren des Filtergehäuses 41 ist ein Trägerteil 50 aus Kunststoff vorgesehen, das aus im Spritzgußverfahren hergestellten Einzelteilen 51, 51a, 52, 53 besteht, die miteinander verschweißt oder verklebt sind. Das Einzelteil 51 besteht aus einem zentralen Rohr 54, an das in seinem oberen Bereich einstükkig eine L-förmige Hülse 55 so angeformt ist, daß zwischen der Außenwand des Rohres 54 und dem mit Öffnungen 56 versehenen längeren Schenkel 57 der L-förmigen Hülse 55 ein Reinraum 58 für das gereinigte Schmieröl des Nebenstromfilterelementes 48 entsteht. Dieser Reinraum 58 ist mit dem Inneren 59 des Rohres 54 über eine im oberen Bereich des Rohres 54 liegende Drosselbohrung 60 verbunden, so daß der obere Bereich des Rohres 54 gleichzeitig als Standrohr wirkt. Das Rohr 54 ist an seinem unteren Ende in einem den Ablaufkanal 45 für das gereinigte Schmieröl des Nebenstromfilters aufnehmenden Stutzen 61 dichtend gelagert, wobei zur Aufnahme eines Rücklaufsperrventiles 62 das untere Ende des Rohres 54 zweigeteilt ist und das Einzelteil 51a mit dem Einzelteil 51 über eine Schnappverbindung 63 verbunden ist.

Um für die Aufnahme des Nebenstromfilterelementes 48 ein ringförmiges Topfteil 64 zu erhalten, besteht das Einzelteil 52 aus einem Z-förmigen Winkelteil 65 mit unterschiedlich langen Schenkeln, dessen einer Schenkel 66 mit Öffnungen 67 versehen die äußere Wand des ringförmigen Topfteiles 64 bildet und dessen kürzerer Schenkel 68 am Rohr 54 und dessen Mittelsteg 69 am kurzen Schenkel 70 der L-förmigen Hülse 55 anliegt, wobei diese Teile miteinander verschweißt sind. Am Mittelsteg 69 ist eine hülsenförmige Verlängerung 71 einstückig angeformt, die in einem Stutzen 72 des Filtergehäuses 2 dichtend gelagert ist und zur Aufnahme des Hauptstromfilterelementes 46 dient, wobei das Hauptstromfilterelement 46 über seine Hülsen 47 an in entsprechenden Nuten gelagerten Dichtungen 73, 74 anliegt.

Um das den Nebenstromfilter aufnehmende ringförmige Topfteil 64 zu schließen und das Nebenstromfilterelement 48 vorzuspannen, ist ein als eine Art Flügelmutter ausgebildeter Deckel 75 mit dem oberen Bereich des Einzelteils 51 des Trägerteils 50 verschraubt. Dieser Abschluß und diese Vorspannung können auch beispielsweise über ein Deckelteil mit Feder und Bajonettverschluß erfolgen.

Eine am oberen Ende des Einzelteils 51 des Trägerteils 50 angebrachte Schnappvorrichtung 76 greift in ein entsprechendes am Gehäusedeckel 42 angebrachtes Gegenstück 77 ein, so daß beim Abnehmen des Gehäusedeckels 42 gleichzeitig das Trägerteil 50 zusammen mit den Filterelementen 46, 48 entnommen wird. Hierbei steuern das in die Stutzen 61, 72 eingreifende Einzelteil 51a und die hülsenförmige Verlängerung 71 die Ablaufkanäle 44, 45 auf, so daß das im Filterelement anstehende Öl abfließen kann.

## Patentansprüche

1. Flüssigkeitsfilter (40) mit einem topfförmigen Gehäuse (41) mit unten liegendem Topfboden, einem Schraubdeckel (42) und mindestens einem austauschbaren ringförmigen radial von außen nach innen durchströmten Filtereinsatz (46), bei dem durch Abschrauben des Deckels (42) an dem Topfboden mindestens ein zumindest bei außer Betrieb befindlichem Ölfilter geschlossener Ablaufkanal (45) freigegeben wird und bei dem das Mittel zur Freigabe dieser Ölabflußöffnung ein mit dem Deckel (42) axial kraftübertragend verrastetes in der durch den mindestens einen Filtereinsatz (46) bestimmten Achse des Flüssigkeitsfilters liegendes Trägerteil (50) ist, dessen Ende bei geschlossenem Deckel (42) in den Ablaufkanal (45) ragt und diesen in diesem Zustand dicht verschließt und bei geöffnetem Deckel (42) aufsteuert.

2. Flüssigkeitsfilter nach Anspruch 1,
dadurch **gekennzeichnet**,
daß zwei Filtereinsätze vorgesehen sind, von denen der eine als Hauptstromfilterelement (46) aus Papier ausgebildet ist und der andere ein getrennt austauschbares Nebenstromfilterelement (48) aus vorgespannter Baumwolle ist, das in einem mit dem Trägerteil (50) verbundenen Teil (52) gelagert ist.

3. Flüssigkeitsfilter nach Anspruch 2,
dadurch **gekennzeichnet,**
daß das Trägerteil (50) zur Aufnahme des Nebenstromfilterelementes (48) ein ringförmiges Topfteil (64) aufweist.

4. Flüssigkeitsfiter nach Anspruch 3,
dadurch **gekennzeichnet,**
daß das ringförmige Topfteil (64) aus zwei miteinander verschweißten Einzelteilen (55, 65) besteht.

5. Flüssigkeitsfilter nach Anspruch 4,
dadurch **gekennzeichnet,**
daß das die äußere Wand (66) des ringförmigen Topfteiles (64) bildende Einzelteil (65) koaxial eine hülsenförmige Verlängerung (71) zur Aufnahme des Hauptstromfilterelementes (46) aufweist.

6. Flüssigkeitsfilter nach Anspruch 5,
dadurch **gekennzeichnet,**
daß in der hülsenförmigen Verlängerung (71) ringförmige Aussparungen zur Aufnahme von Ringdichtungen (73, 74) vorgesehen sind.

7. Flüssigkeitsfilter nach Anspruch 3,
dadurch **gekennzeichnet,**
daß das offene Ende des Topfteils (64) durch einen ringförmigen Deckel (75) verschlossen ist.

8. Flüssigkeitsfilter nach Anspruch 7,
dadurch **gekennzeichnet,**
daß der Deckel (75) das Nebenstromfilterelement (48) axial vorspannt.

9. Flüssigkeitsfilter nach einem der vorhergehenden Ansprüche,
**dadurch gekennzeichnet**,
daß das Trägerteil (50) ein zentrales Rohr (54) sowie eine dieses zumindest teilweise mit radialem Abstand umgebende hülsenförmige radial durchlässige Verlängerung (71) zur Aufnahme des mindestens einen Filterelementes (46) enthält.

10. Flüssigkeitsfilter mit einem topfförmigen Gehäuse mit unten liegendem Topfboden nach Anspruch 1, gekennzeichnet durch die Merkmale:
(a) das Ringfilterelement (46) liegt an seinen axialen Enden jeweils radial dicht an dem Tägerteil (50) an,
(b) das Trägerteil (50) ist im Bereich des Ringfilterelementes (46) zwischen dessen radial dicht an diesem anliegenden Enden als radial durchlässiges Rohr (71) mit etwa gleichem Außendurchmesser ausgebildet,
(c) die Bereiche des Trägerteiles (50), in denen die Enden des Ringfilterelementes (46) radial dicht anliegen, gehen direkt in den radial durchlässigen Rohrbereich (71) des Trägerteils über,
(d) der im Bereich des Ringfilterlementes (46) liegende rohrförmige Innenraum des Trägerteiles (50) ist in dem Bereich der radial dichten Anlage des Ringfilterelementes (46), der an dem dem Schraubdeckel (42) zugewandte Ende des Trägerteils (50) liegt, axial verschlossen,
(e) an dem gegenüberliegenden Ende ist dieser Innenraum des rohrförmigen Bereiches (71) des Trägerteils (50) axial offen,
(f) der radial durchlässige Rohrbereich (71) des Trägerteils (50) ist radial außen dicht in den Boden des topfförmigen Filter-Gehäuses (41) einsteckbar,
(g) für die Durchströmung des Ringfilterelementes (46) von radial außen nach innen besitzt das topfförmige Gehäuse (41) einen Zulauf für die zu filternde Flüssigkeit, der mit dem Raum radial außerhalb des Filterelementes (46) verbunden ist,
(h) ein Abflußkanal (44) für gefilterte Flüssigkeit liegt im Boden des topfförmigen Gehäuses (41) und ist mit dem Innenraum des durchlässigen Rohrabschnittes (71) des Trägerteils (50) verbunden.

## Claims

1. Liquid filter (40) with a pot-shaped housing (41) with a pot base at the bottom, a screw lid (42) and at least one exchangeable annular filter insert (46) permeated from the exterior radially inwardly, in which at least one outlet duct (45) closed at least when the oil filter is out of operation is cleared by unscrewing the lid (42) on the pot base and in which the means for clearing this oil discharge orifice is a carrier part (50) which interlocks with the lid (42) so as to transmit axial forces, is located in the axis of the liquid filter determined by the filter insert (46), of which there is at least one, and of which the end penetrates into the outlet duct (45) when the lid (42) is closed and seals it tightly in this state and controls it when the lid (42) is opened.

2. Liquid filter according to claim 1, characterised in that two filter inserts are provided, of which one is designed as a main flow filter element (46) made of paper and the other is a separately exchangeable secondary flow filter element (48) made of biased cotton stored in a part (52) connected to the carrier part (50).

3. Liquid filter according to claim 2, characterised in that the carrier part (50) has an annular pot part (64) for holding the secondary flow filter element (48).

4. Liquid filter according to claim 3, characterised in that the annular pot part (64) consists of two individual parts (55, 65) welded to one another.

5. Liquid filter according to claim 4, characterised in that the individual part (65) forming the outer wall (66) of the annular pot part (64) has a coaxial sleeve-shaped extension (71) for holding the main flow filter element (46).

6. Liquid filter according to claim 5, characterised in that annular recesses for holding ring seals (73, 74) are provided in the sleeve-shaped extension (71).

7. Liquid filter according to claim 3, characterised in that the open end of the pot part (64) is closed by an annular lid (75).

8. Liquid filter according to claim 7, characterised in that the lid (75) axially biases the secondary flow filter element (48).

9. Liquid filter according to one of the preceding claims, characterised in that the carrier part (50) contains a central pipe (54) and a sleeve-shaped radially permeable extension (71) at least partially surrounding it with radial spacing, for receiving the filter element (46) of which there is at least one.

10. Liquid filter with a pot-shaped housing with a pot base at the bottom according to claim 1, characterised by the features:
(a) the annular filter element (46) rests radially tightly on the carrier part (50) at its axial ends in each case,
(b) the carrier part (50) is designed as a radially permeable pipe (71) with a substantially identical external diameter in the region of the annular filter element (46) between its ends resting radially tightly thereon,
(c) the regions of the carrier part (50) in which the ends of the annular filter element (46) rest radially tightly pass directly into the radially permeable pipe region (71) of the carrier part,
(d) the pipe-shaped interior of the carrier part (50) located in the region of the annular filter element (46) is axially sealed in the region of the radially tight contact of the annular filter element (46) resting on the end of the carrier part (50) facing the screw lid (42),
(e) this interior of the pipe-shaped region (71) of the carrier part (50) is axially open at the opposite end,
(f) the radially permeable pipe region (71) of the carrier part (50) can be inserted radially externally tightly into the base of the pot-shaped filter housing (41),
(g) for the permeation of the annular filter element (46) from the exterior radially inwardly, the pot-shaped housing (41) has an inlet for the liquid to be filtered which is connected to the space radially outside the filter element (46),
(h) a discharge duct (44) for filtered liquid lies in the base of the pot-shaped housing (41) and is connected to the interior of the permeable pipe portion (71) of the carrier part (50).

## Revendications

1. Filtre à liquide (40) comportant un corps en forme de pot (41) avec fond du pot situé en bas, un couvercle à vis (47) et au moins un élément filtrant annulaire remplaçable (46) à écoulement centripète, dans lequel, en dévissant le couvercle (42), on dégage au fond du pot au moins un conduit de départ (45) fermé au moins lorsque le filtre à huile est hors service, et dans lequel le moyen de dégagement de cet orifice d'écoulement d'huile est un élément support (50) encliqueté avec le couvercle (42) de façon à transmettre les forces axialement, situé sur l'axe du filtre à liquide déterminé par le ou les éléments filtrants (46), et dont l'extrémité, lorsque le couvercle (42) est fermé, entre dans le conduit de départ (45) et ferme celui-ci de manière étanche dans cet état, et, lorsque le couvercle (42) est ouvert, ouvre ce conduit.

2. Filtre à liquide selon la revendication 1, caractérisé par le fait qu'il est prévu deux éléments filtrants dont l'un est un élément filtrant de courant principal (46) en papier et l'autre est un élément filtrant de courant dérivé (48) en coton précontraint et remplaçable séparément qui est monté dans un élément (52) joint à l'élément support (50).

3. Filtre à liquide selon la revendication 2, caractérisé par le fait que l'élément support (50) présente une partie pot annulaire (64) destinée à recevoir l'élément filtrant de courant dérivé (48).

4. Filtre à liquide selon la revendication 3, caractérisé par le fait que la partie pot annulaire (64) est constituée de deux éléments (55, 65) soudés l'un à l'autre.

5. Filtre à liquide selon la revendication 4, caractérisé par le fait que l'élément (65) formant la paroi extérieure (66) de l'élément pot annulaire (64) présente coaxialement une rallonge en forme de douille (71) destinée à recevoir l'élément filtrant de courant principal (46).

6. Filtre à liquide selon la revendication 5, caractérisé par le fait que dans la rallonge en forme de douille (71) sont prévus des évidements annulaires destinés à recevoir des joints annulaires (73, 74).

7. Filtre à liquide selon la revendication 3, caractérisé par le fait que l'extrémité ouverte de la partie pot (64) est fermée par un couvercle annulaire (75).

8. Filtre à liquide selon la revendication 7, caractérisé par le fait que le couvercle (75) serre axialement l'élément filtrant de courant dérivé (48).

9. Filtre à liquide selon l'une des revendications précédentes, caractérisé par le fait que l'élément support (50) contient un tube central (54) et une rallonge en forme de douille perméable radialement (71) entourant au moins partiellement à une certaine distance radiale ce tube (54) et destinée à recevoir le ou les éléments filtrants (46).

10. Filtre à liquide comportant un corps en forme de pot avec fond du pot situé en bas selon la revendication 1, caractérisé par les caractéristiques suivantes :
(a) l'élément filtrant annulaire (46), à chacune de ses extrémités axiales, s'appuie radialement de manière étanche sur l'élément support (50),
(b) l'élément support (50), dans la zone de l'élément filtrant annulaire (46) entre les extrémités de celui-ci s'appuyant radialement de manière étanche sur lui, est un tube perméable radialement (71) de diamètre extérieur à peu près égal,
(c) les zones de l'élément support (50) dans lesquelles les extrémités de l'élément filtrant annulaire (46) s'appuient radialement de manière étanche se raccordent directement à la zone tubulaire perméable radialement (71) de l'élément support,
(d) l'intérieur tubulaire situé dans la zone de l'élément filtrant annulaire (46) de l'élément support (50) est fermé axialement dans la zone d'appui radial étanche de l'élément filtrant annulaire (46) située à l'extrémité de l'élément support (50) dirigée vers le couvercle à vis (42),
(e) à l'extrémité opposée, cet intérieur de la zone tubulaire (71) de l'élément support (50) est ouvert axialement,
(f) la partie tubulaire perméable radialement (71) de l'élément support (50) peut être engagée de manière étanche radialement extérieurement dans le fond du corps de filtre en forme de pot (41),
(g) pour la traversée de l'élément filtrant annulaire (46) de l'extérieur radialement vers l'intérieur, le corps en forme de pot (41) a une arrivée pour le liquide à filtrer qui communique avec l'espace situé radialement à l'extérieur de l'élément filtrant (46),
(h) un conduit de départ (44) pour le liquide filtré se trouve dans le fond du corps en forme de pot (41) et communique avec l'intérieur du tronçon de tube perméable (71) de l'élément support (50).
